# EUROPEAN PATENT APPLICATION

(11) **EP 1 602 468 A2**
(43) Date of publication of application: **07.12.2005**
(21) Application number: 05010629.3
(22) Date of filing: 17.05.2005
(51) Int. Cl.: B29C 65/06, F02M 35/10

(54) **Bonding structure for surge tank, surge tank and intake manifold**

(30) Priority: 26.05.2004 JP 2004156737
(71) Applicant: Toyota Boshoku Kabushiki Kaisya, Kariya-shi, Aichi-ken, 448-8651 (JP)
(72) Inventor: Matsushita, Yuushi Toyota Boshoku K.K., Kariya-shi Aichi-ken, 448-8651 (JP)
(74) Representative: TBK-Patent

(57) **Abstract**

An object of the present invention is to provide a bonding structure for a surge tank, a surge tank and an intake manifold, that are not affected by air leakage as a result of having sufficient strength to withstand the application of substantial stress.

The bonding structure for a surge tank that is formed by using vibration welding to bond together respective end surfaces of at least two separately formed surge tank segments (1, 2). A first one of the surge tank segments (1) includes a connection-use protrusion (12) that forms a periphery of the end surface thereof, and a second one of the surge tank segments (2) includes a pair of grooves (23, 24) on the end surface thereof, and a connection-use protruding receiving surface portion (22) which forms a periphery of the end surface and which is disposed between the pair of grooves. The connection-use protrusion (12) and the connection-use protruding receiving surface portion (22) are positioned so as to be offset from respective center points of the end surfaces toward respective inside surface sides thereof.

## Description

### BACKGROUND OF THE INVENTION

### 1. Field of the Invention

The invention relates to a bonding structure for a surge tank, a surge tank and an intake manifold using the same. More specifically, the invention relates to a bonding structure for a surge tank in which a surge tank is formed by using vibration welding to bond together respective end surfaces of at least two separately formed surge tank segments. Further, the invention also relates to a surge tank adopting this bonding structure, and an intake manifold for supplying air to an engine via an intake port, the air being temporarily stored in the surge tank having been intaken from a throttle.

### 2. Description of the Related Art

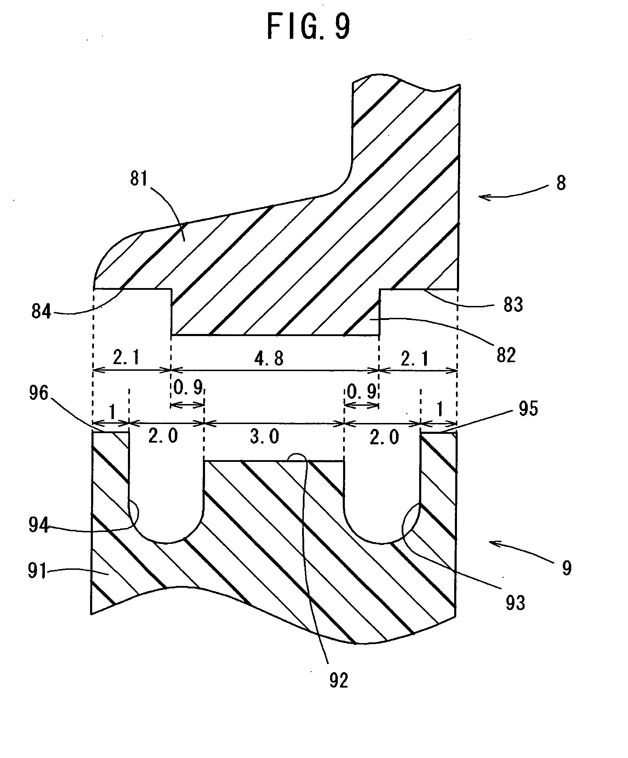

In known technology, light weigh parts made of resin or the like have been widely adopted for automobile components in order to promote vehicle weight reduction. Intake manifolds that supply air intaken from a throttle to an engine via an intake port are no exception to this trend, and lightweight materials such as resin are being used. The surge tank, which is a key structural element of the intake manifold, is welded and formed by vibration welding of at least two overlapping segments of the tank, which is divided into, for example, two parts. FIG 9 shows a structure of a welding portion of such a known surge tank. As shown in FIG 9, surge tank segments 8 and 9 have respective flanges 81 and 91 on end portions thereof. A connection-use protrusion 82 is positioned at the center of the flange 81 in a width direction thereof (refer to Patent Documents 1 and 2 detailed below), and base portions 83 and 84 have the same width as each other. Moreover, a connection-use protruding receiving surface portion 92 is positioned at the width direction center of the flange 91, and grooves 93 and 94 having the same width are provided at either side thereof. Base portions 95 and 96 also have the same width as each other.

However, when the connection-use surfaces are provided in the respective centers of the flanges 81 and 91, the application of substantial stress caused by high pressure has a tendency to cause damage, such as separation of the welded portion, regardless of the strength of the connection formed by the vibration welding. As a result, problems such as air leakage occur.
Patent Document 1: Japanese Patent Laid-Open Publication No. Hei. 10-80952
Patent Document 2: Japanese Utility Model Publication Sho. 63-90063

### SUMMARY OF THE INVENTION

The invention has been conceived of in light of the above described problems, and it is an object thereof to provide a bonding structure for a surge tank, a surge tank and an intake manifold, that are not affected by air leakage as a result of having sufficient strength to withstand the application of substantial stress.

The present invention has the following structure:
1. A bonding structure for a surge tank that is formed by using vibration welding to bond together respective end surfaces of at least two separately formed surge tank segments, characterised in that
   a first one of said surge tank segments includes a connection-use protrusion that forms a periphery of said end surface portion thereof, and
   a second one of said surge tank segments includes a pair of grooves on said end surface thereof, and a connection-use protruding receiving surface portion which forms a periphery of said end surface and which is disposed between said pair of grooves, and
   said connection-use protrusion and said connection-use protruding receiving surface portion are positioned and welded together at respective positions that are offset from respective center points of said end surfaces toward respective inside surface sides thereof.
2. The bonding structure for a surge tank according to 1 above, wherein
   said connection-use protrusion and said connection-use protruding receiving surface portion are positioned to be offset by 2% to 10% with respect to an entire width of said respective end surfaces from said respective center points of said end surfaces towards said respective inside surface sides thereof.
3. The bonding structure for a surge tank according to 1 or 2 above, wherein
   among said pair of grooves provided on said end surface of said second surge tank segment, an inside groove is deeper than an outside groove.
4. The bonding structure for a surge tank according to any one of 1 to 3 above, wherein
   a distance from an inner edge of said connection-use protruding receiving surface portion of said second surge tank segment to an inner edge of said end surface of said second surge tank segment is equal to or less than 2.8 mm.
5. The bonding structure for a surge tank according to any one of 1 to 4 above, wherein
   a width of said connection-use protrusion of said first surge tank segment is 1.25 or more times larger than a width of said connection-use protruding receiving surface portion of said second surge tank segment, and
   a width of said outside groove of said second surge tank segment is 1.25 or more times larger than a width of said inside groove of said second surge tank segment.
6. The bonding structure for a surge tank according to 5 above, wherein
   a width of said connection-use protrusion of said first surge tank segment is 4.5 mm to 6.5 mm, and
   a width of said connection-use protruding receiving surface portion of said second surge tank segment is 3.0 mm to 4.5 mm.
7. The bonding structure for a surge tank according to any one of 1 to 6 above, wherein
   a total melted amount of said connection-use protrusion and said connection-use protruding receiving surface portion that are fused by vibration welding is equal to or less than a total capacity of said pair of grooves.
8. A surge tank that is formed by using vibration welding to bond together at least two separately formed surge tank segments, characterised by comprising:
   the bonding structure for a surge tank according to any one of 1 to 7 above.
9. The surge tank according to 8 above that is formed by using vibration welding to bond together at least two separately formed surge tank segments, characterised in that
   an intake port formed with a circular shape is connected to a first one of said surge tank segments, said surge tank segments have an end portion bonding area including therein an end portion forming area that is contiguous with an external periphery wall of said circular intake port, a neighborhood of said end portion forming area being offset and welded to said inner surface side.
10. The surge tank according to 9 above, wherein
   said bonding structure for a surge tank is provided for, at the least, an edge portion of said surge tank at an air outlet side thereof.
11. The surge tank according to 8 above, wherein
   said bonding structure for a surge tank is provided around an entire circumference of an edge portion of said surge tank.
12. An intake manifold including a surge tank; a throttle which is provided on said surge tank and which intakes air into said surge tank; and at least one intake port provided on one end side of said surge tank, characterised in that
   said surge tank is the surge tank according to 10 above.
13. An intake manifold including a surge tank; a throttle which is provided on said surge tank and which intakes air into said surge tank; and at least one intake port provided on one end side of said surge tank, characterised in that
   said surge tank is the surge tank according to 11 above.

According to the bonding structure for the surge tank of the present invention, vibration welding is used to bond together a fixing surface of the connection-use protrusion and the connection-use protruding receiving surface portion. The fixing surface therebetween is provided so as to be offset from the respective center points of the end surfaces of the surge tank segments toward respective inner surface sides thereof. Accordingly, the distance from the external edges of the end surfaces of the surge tank segments to the fixing surface is made longer, whereby the moment of the fixing force is increased. As a result, even if bending stress is applied to the fixing surface by internal pressure in the surge tank, the structure is adequately able to withstand the bending stress applied. Thus, there is no tendency for damage to occur, like separation of the welded portion.

Moreover, the present bonding structure has the pair of grooves that are provided to either side of the connection-use protruding receiving surface portion. These grooves are able to allow room for and accommodate any burr that is formed by the vibration welding, and thus there is no concern that the burr will enter into the surge tank or protrude outside.

Further, if the above described offset to the inner surface sides from the center points of the end surfaces is set to be from 2% to 10% of the entire width of the end surfaces, then the moment of the fixing force becomes significantly larger, and the structure is able to adequately withstand the bending stress applied by the internal pressure.

Moreover, the inside groove among the pair of grooves provided on the end surface of the second surge tank segment may be formed to be deeper than the outside groove. In this case, even if the fixing surface of the connection-use protrusion and the connection-use protruding receiving surface portion is offset to the inside from the center points of the end surfaces of the surge tank segments, the capacity of the inside groove and the outside groove can be made the same. Accordingly, there is no concern that the capacity will be insufficient to accommodate any burr that is formed by the vibration welding.

In addition, if the distance from the inner edge of the connection-use protruding receiving surface portion of the second surge tank segment to the inner periphery of the end surface of the second surge tank segment is equal to or less than 2.8 mm, the moment of the fixing force is adequately large and it is possible to more reliably ensure that separation of the welded portion does not occur.

Additionally, the width of connection-use protrusion of the first surge tank segment may be made 1.25 or more times larger than the width of the connection-use protruding receiving surface portion of the second surge tank segment, and the width of the outside groove of the second surge tank segment may be made 1.25 or more times larger than the width of the inside groove thereof. In this case, even if the connection-use protrusion and the connection-use protruding receiving surface portion move relative to and rub against each other in the vibration welding, the fixing surface is uniform and even. Moreover, the difference in the width of the grooves enables the fixing surface to be offset toward the inner surface side from the center points of the end surfaces of the surge tank segments. Note that, the inside groove and the outside groove have a capacity variation due to the difference in the respective widths of the inside groove and the outside groove. This capacity variation can be corrected by making the depth of the inside groove greater than that of the outside groove. Accordingly, the capacity of the outside groove and the inside groove can be made the same.

The width of the connection-use protrusion of the first surge tank segment may be formed to be 4.5 mm to 6.5 mm, and the width of the connection-use protruding receiving surface portion to be 3.0 mm to 4.5 mm. In this case, so long as the lower limits of these widths are ensured, the strength of the fixing surface obtained by the vibration welding is adequate, and there is no concern that separation will cause air leakage. Further, the upper limits of these widths are sufficient to ensure that the capacity of the grooves is adequate, and thus the grooves need not be made any deeper than is necessary.

In addition, the total melted amount of the connection-use protrusion and the connection-use protruding receiving surface portion that are fused by the vibration welding may be set to be less than a total capacity of the pair of grooves. In this case, any burr that is formed as a result of the fusion can be accommodated by the grooves, and there is no concern that burr will enter into the surge tank or protrude outside.

Further, the above described bonding structure for a surge tank may be used in a surge tank that is formed by bonding together the at least two separately formed surge tank segments. By adopting this structure, the bonding surface is provided with adequate strength, and as a result there is no concern that air leakages will occur.

Moreover, in the surge tank that is formed by using vibration welding to bond together the at least two separately formed surge tank segments, the circular intake port may be connected to the first surge tank segment, and the surge tank segments may have the end portion bonding area including therein an end portion forming area. Substantial stress is applied to the neighborhood of the end portion forming area that is contiguous with the external periphery wall of the circular intake port. However, in the case that the neighborhood of the end portion forming area that is contiguous with the external periphery wall of the circular intake port is offset and welded to the inner surface side, the end portion forming area is strengthened and thus there is no concern that air leakage will occur.

Further, the bonding structure for a surge tank may be adopted for, at the least, the edge portion of the surge tank at the air outlet side thereof. In this case, the bonding structure for a surge tank according to the present invention is utilized for the air outlet side where greatest bending stress is applied. Accordingly, adequate bonding strength is obtained for the overall structure, and there is no concern that air leakage will occur from any portion thereof.

The bonding structure for a surge tank may be adopted for the entire circumference of the edge portion of the surge tank. Accordingly, fixing force of adequate strength can be obtained throughout the circumference of the edge portion.

In addition, the surge tank having the above described bonding structure may be adopted in the intake manifold provided with the surge tank; the throttle provided in the surge tank for intake of air; and the at least one intake port provided at the one end side of the surge tank. More specifically, the bonding structure for a surge tank may be adopted for, at the least, the edge portion of the air outlet side of the surge tank. In this case, no air leakage from the surge tank occurs, and it is possible to realize an intake manifold that, as a whole, is not affected by air leakage.

Further, the surge tank having the above described bonding structure for the entire periphery of the edge portion thereof may be adopted in the intake manifold provided with the surge tank; the throttle provided in the surge tank for intake of air thereto; and the at least one intake port provided at one end side of the surge tank. In this case, no air leakage from the surge tank occurs, and it is possible to realize an intake manifold that, as a whole, is not affected by air leakage.

### Exemplary Form of the Invention

### 1. Bonding Structure for a Surge Tank

At least two surge tank segments are used in the bonding structure for a surge tank according to the present invention.

The term "at least two" as used here includes two, or three or more segments. However, generally speaking, the surge tank will be formed from two segments. In the case that three or more segments are used, the bonding method used when bonding is the same as that detailed above, with the exception that the references to "a first one" and "a second one" of a bonding portion need to be appropriately applied to the three or more segments.

The above surge tank segments may be made of injection molded plastic or metal. However, plastic is preferable since it is lightweight and easily vibration welded. Further, the surge tank segments may be of any shape, such as dish-shaped or plate-shaped, structure, or size, and may be used for any purpose so long as air or the like is stored in the surge tank formed thereby. For example, the surge tank may be a surge tank that has not yet been machined, which is a key structural component of an automobile-use intake manifold.

Moreover, the term "end surfaces" indicates the respective end surfaces of the end portions of the separate surge tank segments of the surge tank. These end surfaces face each other when bonding by vibration welding is performed. The end surfaces of the surge tank segments do not necessarily have to be linear surfaces, and may have a wave-like shape, protrusions or angled edges.

Prior to bonding, the first surge tank segment has the periphery-forming connection-use protrusion on the end surface thereof. As a result of providing this connection-use protrusion with the periphery-forming shape on the end surface of the first surge tank segments, as long as an upper surface of the connection-use protrusion that is bonded is even and uniform, the shape, size, and other features thereof need not be of any specific type. However, during vibration welding, a portion of the connection-use protrusion is fused, and thus the connection-use protrusion must have sufficient volume for this purpose. Preferably, the cross-section of the connection-use protrusion is substantially rectangular or substantially trapezoid.

Prior to bonding, the second surge tank segment has, on the end surface thereof, the pair of grooves and the connection-use protruding receiving surface portion with a periphery-forming shape that is formed by the pair of grooves. These grooves are provided to allow for and accommodate any burr that is formed when the connection-use protrusion and the connection-use protruding receiving surface portion rub together and weld to each other. The cross section of these grooves may be, for example, semi-circular, substantially rectangular, or a chamfered rectangular shape. However, in order to alleviate stress concentration, it is preferable that a semi-circular or chamfered rectangular shape is used. The connection-use protruding receiving surface portion is formed by the pair of grooves, and is the portion that rubs against and is vibration welded to the connection-use protrusion.

The connection-use protrusion and the connection-use protruding receiving surface portion are both positioned to be offset to the inner surface side from the center points of the end surfaces. Note that, the respective center points of the end surfaces are on an axis that connects center positions between respective outer peripheries and inner peripheries of the end surfaces. The term "offset to the inner surface side" thus indicates an offset toward the inner peripheries of the end surfaces from the center points. By adopting this configuration, the welded surface is offset to the inner surface side from the respective center points of the end surface. Thus, even if bending stress is applied to the welded surface by internal pressure within the surge tank, the distance from the external edge of the end surface of the surge tank to the welded surface is long, and the moment of the fixing force is large. Accordingly, the structure is adequately able to withstand the bending stress applied by the internal pressure. Thus, there is no likelihood that problems will occur, such as separation of the welded portion causing air leakage.

The connection-use protrusion and the connection-use protruding receiving surface portion both are positioned to be offset to the inner surface sides from the center points of the end surfaces by preferably 2% to 10%, or more preferably 4% to 8%, with respect to the entire width of the end surfaces. Here, the term "width of the end surfaces" indicates the width from the respective inner peripheries to the outer peripheries of the end surfaces of the surge tank segments. Note that, 2% is a lower limit at which the bending moment of the fixing force resulting from the vibration welding becomes extremely large, and at which there is no longer any need to be concerned about air leakage. Further, 10% is an upper limit at which it is possible to ensure adequate space for providing the grooves.

In addition, it is preferable that, among the pair of grooves provided on the second surge tank segment, the inside groove is deeper than the outside groove. Still more preferably, the depth of the inside groove may be made 1.25 to 2 times the depth of the outside groove. This is because, if the connection-use protruding receiving surface portion is offset to the inner surface side form the center point of the end surface due to restrictions imposed by the width of the end surface of the second surge tank segment, the width of the inside groove is smaller than that of the outside groove. Accordingly, in order to make the capacity of the inside groove and the capacity of the outside groove the same, it is necessary to make the depth of the inside groove greater than that of the outside groove. By adopting this structure, any burr formed by the vibration welding can be evenly accommodated in the inside groove and the outside groove. Moreover, as the inside groove is made deeper it is possible to favorably attain a heat insulating effect. However, for reasons related to strength, the limit of the depth of the inside groove as compared to that of the outside groove is the above mentioned two times.

Furthermore, it is preferable that the distance from the inner edge of the connection-use protruding receiving surface portion of the second surge tank segment to the inner periphery of the end surface of the second surge tank segment is 1.2 mm to 2.8 mm. Indeed, it is still more preferable if the distance is 1.4 mm to 2.6 mm. As described previously, if both the connection-use protrusion and the connection-use protruding receiving surface portion are offset with respect to the end surfaces by 2% to the respective inside surface sides from the center points of the end surfaces, then the bending moment of the fixing force resulting from the vibration welding becomes extremely large, and significant effectiveness can be obtained. Further, if the distance is equal to or less than 2.8 mm, it is possible to inhibit air leakages with even greater surety. Note that, the lower limit of 1.2 mm is the threshold value at which is it is still possible to form the inside groove.

In addition, it is preferable that the width of the connection-use protrusion of the first surge tank segment is more than 1.25 times and less than 2 times the width of the connection-use protruding receiving surface portion of the second surge tank segment. Still more preferably, the width relationship is more than 1.35 times and less than 1.8 times. Further, it is preferable that the width of the outside groove of the second surge tank segment is more than 1.25 times and less than 2 times the width of the inside groove, and, more preferably more than 1.35 times and less than 1.8 times. The width relationship of the connection-use protrusion of the first surge tank segment and the connection-use protruding receiving surface portion of the second surge tank segment may be set at more than 1.25 times to ensure an even and uniform welding surface, since just a portion of the connection-use protrusion and the connection-use protruding receiving surface portion are fused by the vibration welding as rubbing and relative movement therebetween takes place. On the other hand, the width relationship may be set at less than 2 times in order to ensure strength. Further, the width of the outside groove of the second surge tank segment may be set to more than 1.25 times the width of the inside groove in order to offset the connection-use protrusion of the first surge tank and the connection-use protruding receiving surface portion of the second surge tank as far as possible to the inner surface sides within the range available. On the other hand, the width relationship may be set to less than 2 times in order to ensure width for creating the grooves.

Furthermore, the width of the connection-use protrusion of the first surge tank segment is 4.5 mm to 6.5 mm, and is preferably 4.3 mm to 6.2 mm, and the width of the connection-use protruding receiving surface portion of the second surge tank segment is 3.0 mm to 4.5 mm, and is preferably 3.2 mm to 4.3 mm. The lower limit of 4.5 mm for the width of the connection-use protrusion and the lower limit of 3.0 mm for the connection-use protruding receiving surface portion are lower limits above which the fixing force obtained from the vibration welding is reliably strong enough. Further, the upper limit of 6.5 mm for the width of the connection-use protrusion and of the upper limit of 4.5 mm for the width of the connection-use protruding receiving surface portion are upper limits that make it possible to ensure that the capacity of the grooves is adequate.

The total melted amount of the connection-use protrusion and the connection-use protruding receiving surface portion that are melted and fused by the vibration welding may be set to be equal to or less than the total capacity of the pair of grooves, and preferably may be set to be 1/1.2 times less than the total capacity of the pair of grooves. Note that, the total melted amount of the connection-use protrusion and the connection-use protruding receiving surface portion corresponds to the burr of the plastic fused by the vibration welding, and remains in the outside and inside grooves. Accordingly, it is favorable if the total capacity of the grooves is greater than the burr formed by cooling and hardening of the fused material.

### 2. Surge Tank

The surge tank of the present invention incorporates the exemplary form of the above described structure. So long as the surge tank is used to store air or the like, the surge tank may be adopted for various difference purposes such as a key component of an intake manifold, which is an automobile component, or as a component for a blower. As a result of incorporating the above described bonding structure for a surge tank, it is possible to stably feed air or the like without leakage occurring.

Further, the surge tank of the present invention is a surge tank having at least two surge tank segments formed separately to each other that are bonded together by vibration welding, the circular intake port may be connected to the first surge tank segment, and the surge tank segments may have the end portion bonding area including therein an end portion forming area. It is preferable that, in this surge tank, within the end portion bonding area, the neighborhood of the end portion forming area that is contiguous with the external periphery wall of the circular intake port is offset and welded to the inner surface side.

The above phrase, "formed with a circular shape", indicates the circular-shape of the intake port which is formed integrally with the first surge tank segment and on the external periphery thereof.

The intake port is a duct for feeding air from the outlet of the surge tank to the engine, or the like. The number of intake ports may vary depending on the structure of the engine or the like, or depending on function. Further, the intake port may adopt a variety of different materials such as plastic, metal or ceramic.

The end portion bonding area is a bonding area where vibration welding of the edge portion of the surge tank segments takes place.

The above phrase, "contiguous with an external periphery wall of the circular intake port", indicates being continuously in connection with the wall of the circular intake port that is to the outside rather than the inside. When viewed as a vertical cross-section, this wall is continuously linked to the external periphery of the intake port.

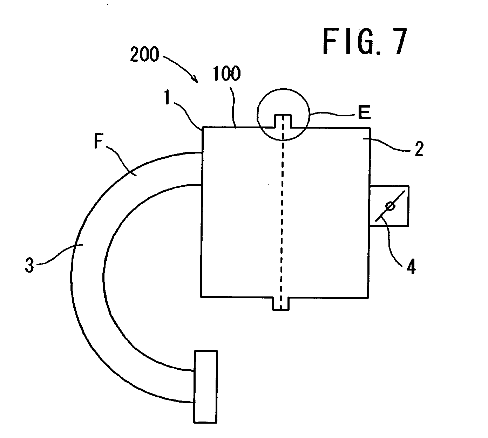

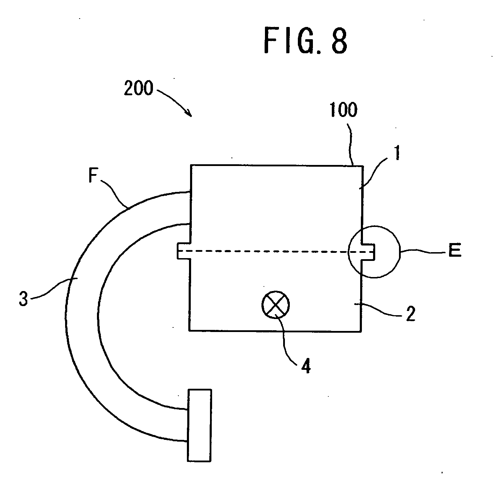

The above phrase, "the neighborhood of an end portion forming area", indicates the neighborhood around, for example, the edge portion E that forms an edge surface that is welded, as is illustrated in FIGS. 7 and 8.

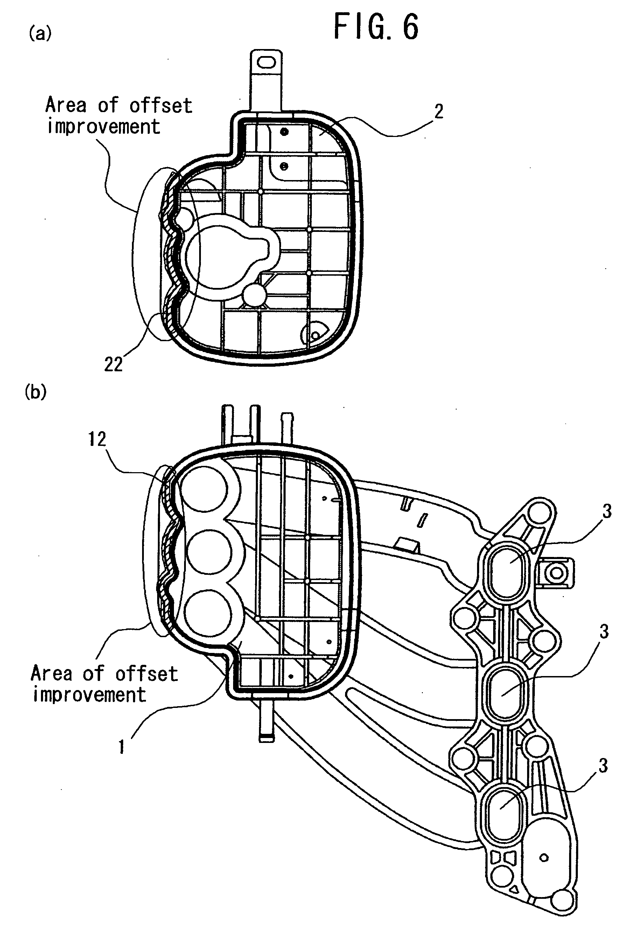

Further, it is preferable that the surge tank adopts the bonding structure for a surge tank according to the present invention for, at the least, the edge portion at the air outlet side. The "air outlet side" is the inlet of the intake port in the case of a surge tank that is a main component of an automobile use intake manifold, and the outlet of a nozzle side in the case of a blower. The "end portion" indicates a portion where the bonding structure of the present invention is adopted, and is, for example, illustrated by the oblique line area of FIG 6.

The term "at the least" included in "at the least, the edge portion at the air outlet side" is intended to indicate, at the least, 40% to 80% of substantially one side end surface of the end portion, and is preferably is 50% to 70% thereof. The reason for adopting the bonding structure for this area of the end portion is that the greatest bend stress is applied thereto. Further, the phrase "the edge portion at the air outlet side" is not intended to indicate that the bonding structure for a surge tank of the present invention cannot be adopted for areas other than the edge portion. Accordingly, the bonding structure may be adopted for an end portion neighboring the end portion of the air outlet side and for an end portion facing thereto. In addition, the bonding structure for a surge tank of the invention may be adopted throughout the periphery of the edge portion of the surge tank.

### 3. Intake Manifold

The intake manifold of the present invention is an intake manifold provided with the surge tank described in 2. above.

The throttle is a valve for supplying air cleaned by the air cleaner to the surge tank. The throttle may adopt any mechanical or electronic control method, and any structure. Moreover, the throttle may be connected to the center of the external wall of the surge tank, the neighborhood of the end portion thereof, or any other portion of the surge tank.

The air intaken from the throttle is temporarily stored in the surge tank at high pressure. The storage tank functions such that the temporarily stored air therein passes through the intake port mouth and is supplied to the engine via the intake port at a predetermined pressure. Since the intake manifold adopts a surge tank with the bonding structure for a surge tank described above, even if bending stress caused by the high pressure air is applied to the end surface, the bonded area of the end surface has sufficient strength, and there is no concern that air leakage will occur.

As mentioned above, the bonding structure for a surge tank of the present invention may be adopted throughout the periphery of the end portion. However, since substantial bending stress is particularly applied to the end portion at the side of the intake port mouth, it is necessary to, at the least, adopt the bonding structure for the end portion at the intake port mouth side (this end portion is the same as that described in "2. Surge tank" above). Further, it is also possible to adopt the bonding structure for a surge tank for other weak portions (for example, the portion neighboring the end portion on the the intake port mouth side). Note that, the air passage becomes suddenly narrower at the intake port mouth side, and thus particularly substantial stress is applied to this area. For this reason, the intake manifold utilizes the surge tank having the bonding structure for a surge tank according to the present invention for the end portion on the intake port mouth side.

### BRIEF DESCRIPTION OF THE DRAWINGS

FIG 1 is an explanatory drawing illustrating a bonding structure for a surge tank according to a present embodiment;
FIG 2 is an explanatory diagram illustrating dimensions shown in FIG 1;
FIG 3 is an explanatory diagram illustrating portions of respective flanges that are fused together;
FIG 4 is an explanatory diagram showing the flanges after bonding;
FIG 5 is a front view of a surge tank according to the present embodiment;
FIG 6 is a plan view showing a surge tank segment of the present embodiment;
FIG 7 is a schematic view of an intake manifold according to the present embodiment;
FIG 8 is a schematic view of an intake manifold according to the present embodiment; and
FIG 9 is an explanatory drawing that illustrates a bonding structure for a surge tank used in related technology.

### DETAILED DESCRIPTION OF THE PREFERRED EMBODIMENTS

Hereinafter, an embodiment of the present invention will be described in detail with reference to the drawings.

### (1) Bonding Structure for Surge Tank

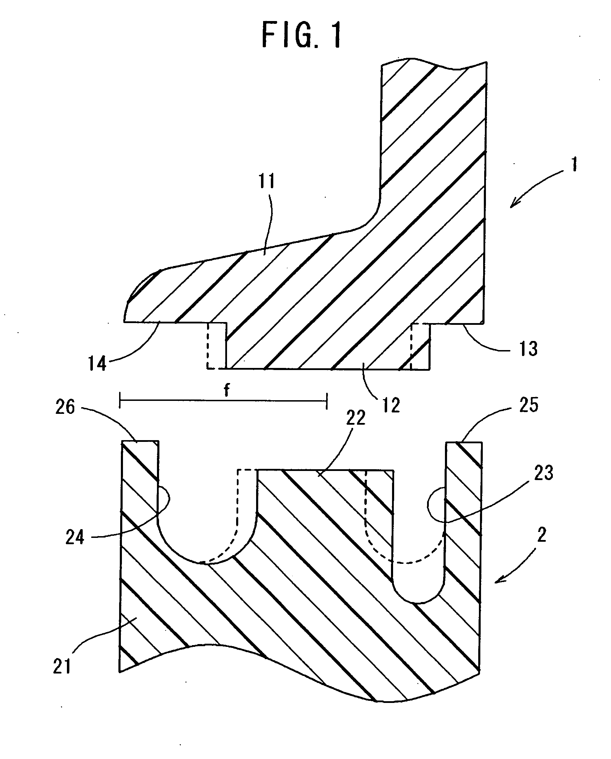

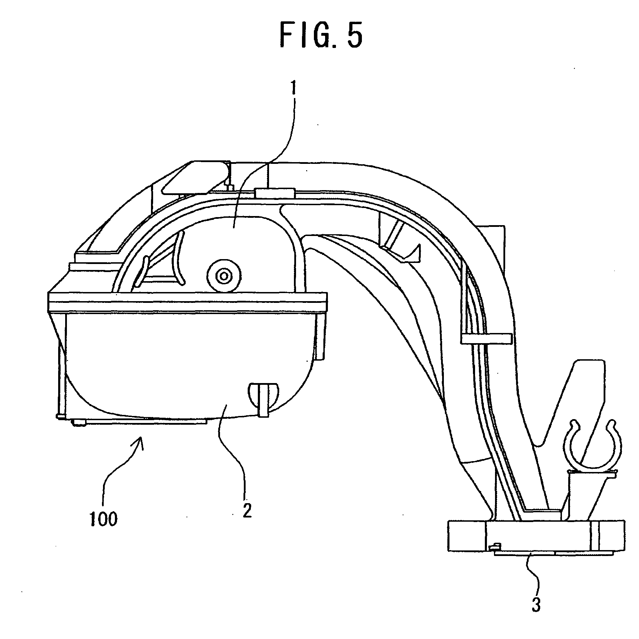

FIG 5 is a front view of a surge tank 100 according to the present embodiment. A first surge tank segment 1 is bonded to a second surge tank segment 2. The surge tank segment 1 and the surge tank segment 2 are injection molded components made of plastic. The surge tank segment 1 has a flange 11 on an end portion thereof, and the surge tank segment 2 has a flange 21 on an end portion thereof (refer to FIG. 1).

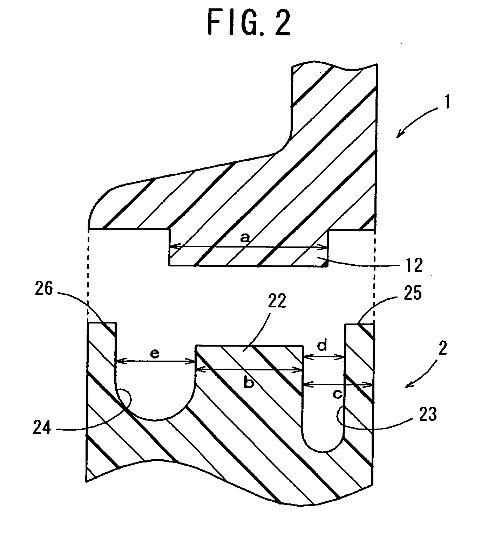

As shown in FIG 1, the end surface of the flange 11 of the end portion of the surge tank segment 1 is formed from an inside base portion 13, an outside base portion 14, and a connection-use protrusion 12. The total width of the flange 11 is 10.5 mm, with a width of the inside base portion 13 being 1.75 mm, a width of the outside base portion 14 being 2.75 mm, and a width a of the connection-use protrusion 12 being 6 mm. The connection-use protrusion 12 is offset by 0.5 mm from the width direction center point of the flange 11 to an inner surface side thereof (refer to FIG 2).

Further, as is apparent from FIG 1, the end surface of the flange 21 of the end portion of the surge tank segment 2 is formed from an inside base portion 25; an outside base portion 26; an inside groove 23; an outside groove 24; and a connection-use protruding receiving surface portion 22 formed by the two grooves 23 and 24. The total width of the flange 21 is 10.5 mm, with a width of the inside base portion 25 being 1 mm, a width of the outside base portion 26 being 1 mm, a width d of the inside groove 23 being 1.75 mm, and a width e of the outside groove 24 being 2.75 mm. The depth of the inside groove 23 is greater than that of the outside groove 24, and the capacity of the inside groove 23 and the outside groove 24 are the same. Moreover, a width c of both the inside base portion 25 and the inside groove 23 is 2.75 mm. A width b of the connection-use protruding receiving surface portion 22 is 4 mm. The connection-use protruding receiving surface portion 22 is offset by 0.5 mm from the width direction center point of the flange 21 to the inner surface sides of the thereof. Accordingly, the width of the connection-use protrusion 12 is 1.5 times that of the connection-use protruding receiving surface portion 22.

Next, the method used for bonding of the bonding structure of the present embodiment and the operation thereof will be described.

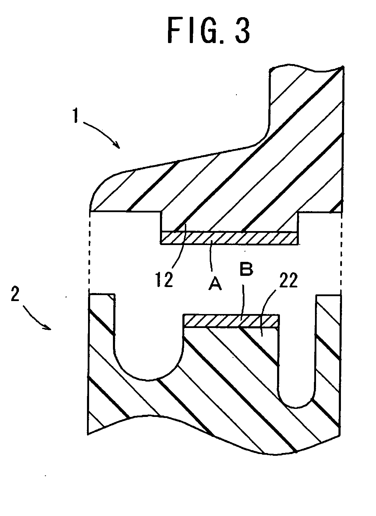

The flange 11 and the flange 21 are placed facing each other such that the connection-use protrusion 12 abuts with the connection-use protruding receiving surface portion 22. Then, high frequency vibration is applied while external force is added. As a result, the connection-use protrusion 12 and the connection-use protruding receiving surface portion 22 move relative to and rub against each other. This rubbing generates frictional heat which causes respective portions A and B of the connection-use protrusion 12 and the connection-use protruding receiving surface portion 22 that mutually rub against each other to melt and fuse (refer to FIG. 3). Accordingly, the connection-use protrusion 12 and the connection-use protruding receiving surface portion 22 are fixed together. This vibration welding also occurs at the respective abutting portions of the base portion 13 and the base portion 25, and the base portion 14 and the base portion 26. Note that, it is not strictly speaking necessary for the base portion 13 and the base portion 25, and the base portion 14 and the base portion 26 to abut against each other. Accordingly, so long as no burr is formed, there may be a degree of clearance between the respective base portions 13 and 25, and the base portions 14 and 26.

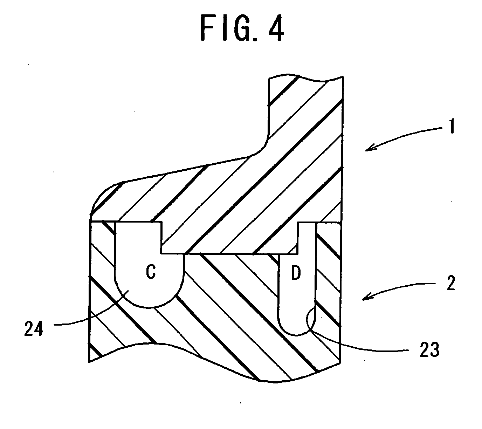

The portions A and B of the connection-use protrusion 12 and the connection-use protruding receiving surface portion 22 are cooled and form burr, which can be accommodated by the two grooves 23 and 24. The combined volume of areas C and D of the two grooves 23 and 24 is larger than that of the portions A and B (refer to FIG 4).

As mentioned previously, the vibration welded connection-use protrusion 12 and the connection-use protruding receiving surface portion 22 are offset by 0.5 mm to the respective inner surface sides of the flanges 11 and 21 from the width direction center points thereof (0.5 mm is roughly equivalent to a 4.8 % offset with respect to the entire width). Accordingly, the length f shown in FIG 1 is 6.75 mm (the length f is equivalent to the distance from the respective outer edge of the flanges 11 and 21 to the respective center points of the connection-use protrusion 12 and the connection-use protruding receiving surface portion 22), and the moment of the fixing force is made larger than would be the case without the offset.

### (2) Surge Tank

### (i) First Form

The bonding structure for a surge tank according to the present embodiment may be applied to the surge tank 100 of an intake manifold 200, which is an automobile component. The surge tank 100 of the present embodiment, as shown in FIGS. 5 and 6, includes two bonded surge tank segments 1 and 2. Respective inlet openings of intake ports 3 are formed at one end portion of the surge tank 100. The intake ports 3 function as outlets for air.

High pressure air intaken from a throttle 4 (not shown in FIGS. 5 or 6, but illustrated in FIGS. 7 and 8) is temporarily stored in the surge tank 100, and then supplied to an engine (not shown) via the intake ports 3. At this time, the flow path becomes suddenly narrower in the area where the air enters the inlet openings of the intake ports 3 from the surge tank 100. Accordingly, substantial stress is applied to neighboring periphery walls of the intake ports 3 and an area F that is contiguous therewith. Further, substantial bending stress is applied at point E. To address this, the bonding structure for a surge tank according to the present embodiment is adopted for an edge portion (E) at the inlet opening side of the intake ports 3.

### (3) Intake Manifold

The intake manifold 200 of the present embodiment, as shown in FIG 5, includes the surge tank 100, the throttle 4 (not shown in FIGS. 5 and 6, but shown in FIGS. 7 and 8) and the intake port 3.

Note that, the surge tank 100 is the same as that described in (2) above.

The throttle 4 is a valve for supplying air cleaned by an air cleaner, not shown, to the surge tank 100 via a duct. The valve of the throttle 4 is electronically controlled in a known manner, and regulates the flow rate of the air. A casing of the throttle 4 is fixed by screws to the center of an outer wall of the surge tank segment 1, and packing material is interposed therebetween to prevent air leakage.

The intake port 3 is a cylindrical duct made of plastic, and has one end fitted and sealed to the surge tank 100 in the vicinity of an end portion thereof. Moreover, the intake port 3 has a curve in a middle portion thereof, and the other end leads to and is directly connected to each bank of cylinders (not shown) of the engine.

Next, the operation of the intake manifold 200 according to the present embodiment will be explained.

Air taken in from the atmosphere is cleaned by the air cleaner, not shown. A duct extends from the air cleaner and the other end thereof is connected to the throttle 4. Air flows to the throttle 4 and has its flow rate regulated to a high pressure thereby. The high pressure air then enters the surge tank 100, thus filling it with high pressure air. Since the flow path becomes suddenly narrower at the inlet opening of the intake port 3 that is the outlet for the air, high pressure is particularly applied to the edge portion to the sides of the inlet opening of the intake port 3. Thus, substantial bending stress is applied. However, since the bonding structure for a surge tank of the present embodiment is adopted for the edge portion to the sides of the inlet opening of the intake port 3, the moment of the fixing force is large. The air that has entered the intake port 3 passes therethrough and flows to each bank of cylinders of the engine.

### (4) Effects of the Invention

According to the bonding structure for a surge tank of the present embodiment, the connection-use protrusion 12 and the connection-use protruding receiving surface portion 22 are bonded together by vibration welding, and the fixing surface therebetween is offset by 0.5 mm to the respective inner surface sides of the flange portions 11 and 21 from the center points thereof. Accordingly, the distance from the external edge of the flanges 11 and 21 is long, and the bending moment of the fixing force is large. Thus, the structure is able to adequately withstand the applied bending stress, and no air leakage occurs.

Moreover, the inside groove 23 and the outside groove 24 have the same volume and adequate capacity. Thus, even if burr is formed by the vibration welding, this burr can be accommodated with ease by the inside groove 23 and the outside groove 24. Accordingly, there is no concern that the burr will enter into the surge tank 100. Moreover, the width of the connection-use protrusion 12 is 1.5 times that of the connection-use protruding receiving surface portion 22 and thus the vibration welding surface is evenly and uniformly welded.

Moreover, the surge tank 100 provided with the bonding structure for a surge tank of the present embodiment adopts the bonding structure for the air outlet where the highest pressure is applied. Accordingly, air leakage does not occur.

In addition, the intake manifold 200 of the present embodiment utilizes the bonding structure for a surge tank of the present embodiment for the surge tank 100, which is a key structural component thereof. Therefore, no separation occurs even at the bonding portion where extremely high pressure is applied, and thus no air leakage occurs.

The present invention is not limited to the above described embodiment, and may be modified or adapted as required in various manners that fall within the scope of the invention. More specifically, in the above described embodiment the offset of the vibration welding surface is set at 0.5 mm. However, the invention is in no way limited to this, and the strengthening effect can be obtained by offsetting the vibration welding surface just a little to the inner surface side. More specifically, if an offset to the inner surface sides of between 2% and 10% of the respective widths of the flanges 11 and 21 is provided, it is possible to obtain an adequate strengthening effect.

In addition, in the present embodiment, the width of the connection-use protrusion 12 is 6 mm, and the width of the connection-use protruding receiving surface portion 22 is 4 mm, and thus the size of width a in FIG. 2 is 1.5 times that of width b. However, the invention is not limited to this, and if the size of width a is 1.25 times or more that of width b, it is possible for the vibration welding surface to be evenly and uniformly welded and fixed.

Moreover, the surge tank 100 of the present embodiment only adopts the bonding structure for a surge tank according of the present embodiment for the edge portion of the surge tank segments 1 and 2 at the side of the inlet opening of the intake port 3. However, the invention is not limited to this, and the bonding structure for a surge tank may be utilized around the entire periphery of the flanges 11 and 12.

The bonding structure for a surge tank and the surge tank have a wide range of industrial applications, and are particularly suitable for adoption in an automobile use intake manifold.

An object of the present invention is to provide a bonding structure for a surge tank, a surge tank and an intake manifold, that are not affected by air leakage as a result of having sufficient strength to withstand the application of substantial stress.

The bonding structure for a surge tank that is formed by using vibration welding to bond together respective end surfaces of at least two separately formed surge tank segments (1, 2). A first one of the surge tank segments (1) includes a connection-use protrusion (12) that forms a periphery of the end surface thereof, and a second one of the surge tank segments (2) includes a pair of grooves (23, 24) on the end surface thereof, and a connection-use protruding receiving surface portion (22) which forms a periphery of the end surface and which is disposed between the pair of grooves. The connection-use protrusion (12) and the connection-use protruding receiving surface portion (22) are positioned so as to be offset from respective center points of the end surfaces toward respective inside surface sides thereof.

## Claims

1. A bonding structure for a surge tank that is formed by using vibration welding to bond together respective end surfaces of at least two separately formed surge tank segments, **characterised in that**
a first one of said surge tank segments includes a connection-use protrusion that forms a periphery of said end surface portion thereof, and
a second one of said surge tank segments includes a pair of grooves on said end surface thereof, and a connection-use protruding receiving surface portion which forms a periphery of said end surface and which is disposed between said pair of grooves, and
said connection-use protrusion and said connection-use protruding receiving surface portion are positioned and welded together at respective positions that are offset from respective center points of said end surfaces toward respective inside surface sides thereof.

2. The bonding structure for a surge tank according to claim 1, wherein
said connection-use protrusion and said connection-use protruding receiving surface portion are positioned to be offset by 2% to 10% with respect to an entire width of said respective end surfaces from said respective center points of said end surfaces towards said respective inside surface sides thereof.

3. The bonding structure for a surge tank according to claim 1 or 2, wherein
among said pair of grooves provided on said end surface of said second surge tank segment, an inside groove is deeper than an outside groove.

4. The bonding structure for a surge tank according to any one of claims 1 to 3, wherein
a distance from an inner edge of said connection-use protruding receiving surface portion of said second surge tank segment to an inner edge of said end surface of said second surge tank segment is equal to or less than 2.8 mm.

5. The bonding structure for a surge tank according to any one of claims 1 to 4, wherein
a width of said connection-use protrusion of said first surge tank segment is 1.25 or more times larger than a width of said connection-use protruding receiving surface portion of said second surge tank segment, and
a width of said outside groove of said second surge tank segment is 1.25 or more times larger than a width of said inside groove of said second surge tank segment.

6. The bonding structure for a surge tank according to claim 5, wherein
a width of said connection-use protrusion of said first surge tank segment is 4.5 mm to 6.5 mm, and
a width of said connection-use protruding receiving surface portion of said second surge tank segment is 3.0 mm to 4.5 mm.

7. The bonding structure for a surge tank according to any one of claims 1 to 6, wherein
a total melted amount of said connection-use protrusion and said connection-use protruding receiving surface portion that are fused by vibration welding is equal to or less than a total capacity of said pair of grooves.

8. A surge tank that is formed by using vibration welding to bond together at least two separately formed surge tank segments, **characterised by** comprising:
the bonding structure for a surge tank according to any one of claims 1 to 7.

9. The surge tank according to claim 8 that is formed by using vibration welding to bond together at least two separately formed surge tank segments, **characterised in that**
an intake port formed with a circular shape is connected to a first one of said surge tank segments, said surge tank segments have an end portion bonding area including therein an end portion forming area that is contiguous with an external periphery wall of said circular intake port, a neighborhood of said end portion forming area being offset and welded to said inner surface side.

10. The surge tank according to claim 9, wherein
said bonding structure for a surge tank is provided for, at the least, an edge portion of said surge tank at an air outlet side thereof.

11. The surge tank according to claim 8, wherein
said bonding structure for a surge tank is provided around an entire circumference of an edge portion of said surge tank.

12. An intake manifold including a surge tank; a throttle which is provided on said surge tank and which intakes air into said surge tank; and at least one intake port provided on one end side of said surge tank, **characterised in that**
said surge tank is the surge tank according to claim 10.

13. An intake manifold including a surge tank; a throttle which is provided on said surge tank and which intakes air into said surge tank; and at least one intake port provided on one end side of said surge tank, **characterised in that**
said surge tank is the surge tank according to claim 11.
